# FASCICULE DE BREVET EUROPEEN

(11) **EP 0 732 999 B1**
(45) Date de publication et mention de la délivrance du brevet: **21.10.1998**
(21) Numéro de dépôt: 95903269.9
(22) Date de dépôt: 22.11.1994
(51) Int. Cl.: B60B 21/10, B60B 21/02

(54) **JANTE, ANNEAU DE SOUTIEN ET ENSEMBLE COMPRENANT LESDITS ELEMENTS**
RADFELGE, STÜTZRING UND EINRICHTUNG MIT DIESEN TEILEN
TYRE RIM, SUPPORT RING AND ASSEMBLY COMPRISING SAME

(30) Priorité: 08.12.1993 FR 9314703
(43) Date de publication de la demande: 25.09.1996
(73) Titulaire: COMPAGNIE GENERALE DES ETABLISSEMENTS MICHELIN-MICHELIN & CIE, F-63040 Clermont-Ferrand Cédex 01 (FR)
(72) Inventeur: MUHLHOFF, Olivier, F-63100 Clermont-Ferrand (FR); POMPIER, Jean-Pierre, F-63530 Volvic (FR)
(74) Mandataire: Devaux, Edmond-Yves
(86) Numéro de dépôt international: EP9403872
(87) Numéro de publication internationale: WO9515862

(56) Documents cités:
- EP-A- 0 138 027
- EP-A- 0 573 162
- DE-A- 3 626 012
- FR-A- 1 139 619
- FR-A- 2 560 121
- US-A- 4 246 950
- US-A- 5 000 241

## Description

La présente invention a pour objet la réalisation d'une jante de montage monobloc, pour un pneumatique, de préférence à carcasse radiale, et pouvant former éventuellement avec un anneau de soutien de bande de roulement et ledit pneumatique un ensemble roulant utile dans le cas de roulage où la pression de gonflage s'abaisse anormalement par rapport à la pression nominale d'emploi, dite pression de service, la pression de gonflage pouvant même devenir nulle.

Les principales difficultés rencontrées dans le cas d'un roulage à plat ou à pression faible concernent les risques de décoincement des bourrelets du pneumatique et en particulier le décoincement du bourrelet situé du côté extérieur du pneumatique monté du côté extérieur du véhicule. Les techniques proposées et bien connues pour éviter de tels décoincements, et en particulier celle consistant à disposer axialement à l'intérieur du siège extérieur de jante une saillie ou hump de faible hauteur, ne semblent pas donner entière satisfaction et tendent à augmenter les difficultés de montage et de démontage des pneumatiques.

Une solution, susceptible d'être appliquée au problème de décoincement de bourrelets, est celle décrite dans le brevet français 1139619, qui concerne un ensemble formé d'un pneumatique et d'une jante tels que les bords souples du pneumatique, contrairement aux bourrelets usuels, viennent, sous l'effet de la pression de gonflage, enserrer des butées de jante destinées à maintenir lesdits bords écartés l'un de l'autre. Cette solution demande une structure du pneumatique pour le moins spéciale et non conforme au compromis de propriétés requises pour un pneumatique actuel.

Certaines solutions antérieures préconisent l'addition à une jante, telle que décrite précédemment, d'un appui de soutien, intégré ou rapporté et fixé par tout moyen disponible. Que ce soit avec hump ou sans hump, les ensembles comportant des jantes avec appui de soutien sont connus, et les demandes allemande 3 626 012 et française 2 560 121 montrent de tels ensembles. Leur emploi ne s'est cependant pas généralisé car, malgré les progrès réalisés, se posent aussi de difficiles problèmes de montage. La demande française, citée ci-dessus, décrit un procédé de montage permettant la suppression de nombreuses difficultés : le basculement et l'ovalisation d'un des bourrelets du pneumatique permettent le passage de la jante, munie de son appui de soutien à l'intérieur du pneumatique, si ladite jante est présentée avec son axe de rotation perpendiculaire à l'axe de rotation de l'enveloppe pneumatique, les bourrelets étant ensuite, à l'aide des gorges de montage situées axialement de part et d'autre de l'appui de soutien, placés sur leurs sièges de jante respectifs.

La méthode décrite ci-dessus n'est pas applicable dans tous les cas, la longueur circonférentielle des tringles de pneumatique devant être relativement grande, d'où l'impossibilité d'avoir à sa disposition des pneumatiques de rapport de forme usuelle avec un appui intérieur suffisamment haut, donc efficace.

Par ailleurs, les jantes concernées par ces demandes comportent des gorges de montage. Une gorge de montage, servant au montage des bourrelets du pneumatique sur leurs sièges respectifs de jante, possède une profondeur et une largeur axiale, qui est fonction de la largeur axiale des bourrelets, du diamètre intérieur des anneaux de renforcement éventuels desdits bourrelets, et le cas échéant de la largeur de la portée de jante, destinée à recevoir un anneau de soutien éventuel de bande de roulement.

La profondeur d'une gorge peut paraître, dans certains cas, excessive en ce qu'elle diminue fortement l'espace libre destiné aux organes mécaniques de roulage et notamment de freinage. De même, la largeur axiale d'une gorge peut être un empêchement notoire à l'élargissement axial d'un anneau de soutien de bande de roulement, lorsqu'il est avantageux d'en utiliser.

La présente invention a pour but de supprimer toute(s) gorge(s) de montage, tout en permettant une performance élevée relative au décoincement des bourrelets de pneumatique et en minimisant les difficultés de montage et démontage desdits bourrelets et/ou d'un appui de soutien éventuel. A cet effet et conformément à l'invention, une jante monobloc, destinée au montage d'un pneumatique ayant au moins deux bourrelets, délimitée axialement par un premier bord et un deuxième bord de jante, distants axialement de la largeur S de jante et comprenant, vue en section méridienne, au moins un premier et un deuxième sièges de jante, et un fond de jante, caractérisée en ce que le premier siège de jante a une génératrice dont l'extrémité axialement intérieure est sur un cercle de diamètre supérieur au diamètre du cercle sur lequel se trouve l'extrémité axialement extérieure, ledit premier siège de jante étant prolongé axialement à l'extérieur par une saillie ou hump de faible hauteur, et le deuxième siège de jante ayant une génératrice dont l'extrémité axialement intérieure est sur un cercle de diamètre supérieur au diamètre du cercle sur lequel se trouve l'extrémité axialement intérieure du premier siège de jante, et le fond de jante, démunie de gorge de montage, ayant un diamètre minimum, qui est le diamètre de son extrémité axialement la plus proche du premier siège de jante, au moins égal au diamètre de toute partie de jante comprise entre ladite extrémité et le premier bord de jante.

On appelle diamètre du fond de jante, mesuré dans un plan parallèle au plan équatorial de la jante, la distance maximale séparant deux points diamétralement opposés dudit fond de jante. Le diamètre minimum du fond de jante est le diamètre, tel que défini ci-dessus et mesuré dans le plan parallèle au plan équatorial passant par son extrémité la plus proche du premier siège de jante.

La différence entre les diamètres des cercles, sur lesquels se trouvent respectivement les extrémités axialement intérieures des sièges de jante, est de préférence supérieure à 2 mm.

Le premier siège de jante peut être prolongé axialement à l'extérieur par une saillie ou hump de faible hauteur, la hauteur de ladite saillie étant en tous points comparable à la hauteur des saillies ou humps qui prolongent axialement à l'intérieur les sièges de jantes usuels et normalisés par les instances internationales, telles que la T.R.A ou l'E.T.R.T.O. Cette saillie peut avoir une paroi intérieure sensiblement tronconique et faisant avec l'axe de rotation de la jante un angle au moins égal à 30°.

Selon une première forme de réalisation, conforme à l'invention, l'extrémité axialement extérieure du deuxième siège de jante est sur un cercle de diamètre inférieur au diamètre du cercle sur lequel se trouve l'extrémité axialement intérieure, ce siège étant, comme le premier, dit incliné vers l'extérieur.

Ce deuxième siège de jante est alors avantageusement prolongé axialement à l'extérieur, comme dans le cas du premier siège de jante, par une saillie de faible hauteur à paroi intérieure sensiblement tronconique et faisant avec l'axe de rotation un angle au moins égal à 30°. Il est de même avantageux, selon cette première variante de l'invention, que le diamètre du cercle, sur lequel se trouve l'extrémité axialement extérieure du deuxième siège de jante, soit supérieur au diamètre du cercle sur lequel se trouve l'extrémité axialement intérieure du premier siège de jante, d'au moins 2 mm.

Selon une deuxième variante, conforme à l'invention, l'extrémité axialement extérieure du deuxième siège de jante est sur un cercle de diamètre au moins égal au diamètre du cercle sur lequel se trouve l'extrémité axialement intérieure dudit siège. Ce deuxième siège est alors dit incliné vers l'intérieur, y compris par convention s'il est plat.

Il peut être prolongé axialement à l'extérieur par un rebord de jante, formé d'au moins une partie sensiblement perpendiculaire à l'axe de rotation, et dont la hauteur mesurée par rapport à l'extrémité du siège à laquelle il est adjacent, est comparable à la hauteur d'un rebord de jante connu et normalisé par les instances internationales.

Que la jante, conforme à l'invention, soit dotée d'un deuxième siège de jante incliné vers l'intérieur ou incliné vers l'extérieur, elle peut comprendre un fond de jante muni d'une butée de positionnement pour anneau de soutien de bande de roulement, ladite butée étant disposée axialement entre les deux extrémités du fond de jante. Cette butée de positionnement définit, avec l'extrémité du fond de jante la plus proche de l'extrémité axialement intérieure du premier siège de jante, une portée de jante, destinée à recevoir l'anneau de soutien de bande de roulement, anneau qui servira lui-même de butée au bourrelet destiné à être monté sur le premier siège de jante, et dont la longueur axiale pourra être choisie librement par le concepteur de l'ensemble formé par la jante et l'anneau de soutien, par exemple en fonction du poids de l'ensemble.

Il est alors avantageux que le deuxième siège de jante soit axialement adjacent à l'intérieur à la génératrice d'une protubérance, génératrice faisant avec l'axe de rotation de la jante un angle ouvert axialement vers l'intérieur et radialement vers l'extérieur au moins égal à 45°.

Dans le cas d'un deuxième siège de jante incliné vers l'intérieur, la hauteur de cette protubérance, mesurée par rapport à l'extrémité axialement intérieure dudit siège, est semblable à la hauteur des saillies ou humps qui prolongent à l'intérieur les sièges de jante actuels et normalisés. La paroi axialement intérieure de ladite protubérance a alors préférentiellement une génératrice sensiblement tronconique et faisant avec l'axe de rotation de la jante un angle ouvert axialement et radialement vers l'extérieur au plus égal à 45°.

Dans le cas d'un deuxième siège de jante incliné vers l'extérieur, la protubérance a avantageusement une paroi axialement intérieure sensiblement perpendiculaire à l'axe de rotation de la jante, et la hauteur de la paroi axialement extérieure de ladite protubérance est au plus égale à la moitié de la hauteur de la paroi axialement intérieure, mesurée par rapport à l'extrémité du fond de jante la plus proche du deuxième siège de jante. Le diamètre du cercle sur lequel se trouve l'extrémité radialement extérieure de ladite protubérance est supérieur au diamètre de toute partie de la jante comprise entre ladite protubérance et le deuxième bord de jante.

Une jante, conforme à l'invention, peut aussi avoir un fond de jante servant de portée, apte à recevoir un anneau de soutien de bande de roulement dont la largeur axiale à sa base est égale à la distance axiale séparant les deux bourrelets du pneumatique, monté sur jante et gonflé à sa pression de service; l'anneau de soutien sert alors de butée aux deux bourrelets de pneumatique. La hauteur de la protubérance, axialement adjacente à l'extrémité axialement intérieure du deuxième siège de jante, peut alors être de faible valeur et même nulle.

Elle est de faible valeur, par exemple, dans le cas d'un deuxième siège de jante incliné vers l'extérieur. Il faut entendre par hauteur de faible valeur une hauteur au plus égale à la hauteur des saillies normalisées, et l'extrémité radialement extérieure de ladite protubérance étant toujours sur le cercle de diamètre maximum de la jante. La paroi axialement intérieure de la protubérance peut alors avoir une génératrice tronconique faisant avec l'axe de rotation un angle ouvert radialement et axialement vers l'extérieur au plus égal à 30°.

Elle est préférentiellement nulle dans le cas d'un deuxième siège de jante incliné vers l'intérieur, l'extrémité axialement intérieure dudit siège étant alors confondue avec l'extrémité du fond de jante la plus proche, ou étant dans le plan parallèle au plan équatorial qui contient l'extrémité dudit fond de jante.

Dans tous les cas évoqués ci-dessus, les sièges de jante ont préférentiellement des génératrices tronconiques faisant avec l'axe de rotation de la jante un angle compris entre 0° et 30°. Les génératrices desdits sièges peuvent avoir des angles égaux ou différents entre eux.

Le fond de jante aura de préférence une génératrice rectiligne, et en outre avantageusement parallèle à l'axe de rotation de la jante, le fond de jante étant alors cylindrique. Le diamètre minimum du fond de jante cylindrique peut être égal au diamètre du cercle sur lequel se trouve l'extremité axialement intérieure du premier siège de jante, ledit diamètre définissant le diamètre nominal de la jante.

La hauteur d'une saillie, axialement à l'extérieur d'un siège de jante, est avantageusement au plus égale à 1,25% du diamètre nominal de la jante.

Un ensemble, formé par une jante et un anneau de soutien de bande de roulement, est conforme à l'invention, quand la jante de l'ensemble est une jante telle que décrite ci-dessus et que l'anneau de soutien est ovalisable, de préférence inextensible circonférentiellement et enfilable sur le fond de jante.

L'efficacité maximale de l'ensemble conforme à l'invention est obtenue pour des hauteurs d'anneau de soutien élevées, préférentiellement supérieures à 40 % de la hauteur de l'armature de carcasse du pneumatique destiné à être monté avec ledit anneau. Cette particularité offre l'avantage de prolonger le roulage à plat, c'est-à-dire à pression de gonflage nulle, sans provoquer, dans le cas d'une structure usuelle des flancs du pneumatique, des déchéances au niveau de ceux-ci, de l'armature de carcasse et même de l'armature de sommet.

L'anneau de soutien est aisément enfilable du fait des caractéristiques particulières de la jante de montage et si l'on choisit son diamètre intérieur minimum, au moins égal au diamètre minimum du fond de jante, et au plus supérieur de 2 mm audit diamètre, sa génératrice intérieure étant parallèle à la génératrice dudit fond de jante. Pour éviter les inconvénients possibles dus à l'effet des forces centrifuges à grande vitesse, la génératrice intérieure de l'anneau est distante de la génératrice du fond de jante d'au plus 2 mm.

L'anneau de soutien, ovalisable et inextensible circonférentiellement, est préférentiellement constitué de vulcanisat caoutchouteux sous forme annulaire, ledit vulcanisat étant renforcé par des armatures de fils ou câbles disposés circonférentiellement, à 2° près. Une telle constitution permet une manipulation aisée, tout en assurant l'inextensibilité dans toutes les conditions de roulage et en particulier sous l'effet des forces centrifuges dues à la grande vitesse.

De manière générale, l'anneau de soutien présente, vu en section méridienne, une forme quasi-rectagulaire avec deux parois latérales sensiblement perpendiculaires à l'axe de rotation de l'ensemble. Il peut être avantageux que l'anneau de soutien ait, vu en section méridienne, et dans le cas où ledit anneau de soutien a une base de largeur axiale inférieure à la distance axiale séparant les deux bourrelets, une forme différente. Ladite forme peut être caractérisée en ce que la paroi latérale la plus proche du deuxième siège de jante est telle que la distance axiale entre ladite paroi et le plan parallèle au plan équatorial passant par l'extrémité axialement intérieure du deuxième siège de jante croisse en fonction de la hauteur de l'anneau de soutien, pour devenir maximale et très proche dudit plan parallèle à une distance radiale du fond de jante sensiblement égale à la hauteur de l'anneau.

Outre que l'ensemble, conforme à l'invention, résout le problème de décoincement des bourrelets tout en minimisant les problèmes de montage des pneumatiques dans tous les cas qui se présentent usuellement, l'ensemble formé par une jante, telle que décrite ci-dessus et conforme à l'invention, et un pneumatique dont les bourrelets ont des formes adaptées à la forme de la jante offre d'autres avantages.

En effet, si l'ovalisation des bourrelets d'un pneumatique est une opération nécessaire pour le montage dudit pneumatique et bien que la constitution de certains anneaux de renforcement de bourrelets, en particulier les tringles de type "tressé", permettent une ovalisation facile, cette manipulation ne doit pas dépasser certaines limites. En particulier, une ovalisation trop poussée, ce qui est le cas dans l'art antérieur décrit, affecte fortement la rigidité d'une tringle, que ce soit sous effort de traction, de flexion sur chant, de flexion dans son plan, ce qui se traduit dans certains cas du pneumatique en roulage par des propriétés d'antidécoincement, d'étanchéité, d'endurance à la fatigue des bourrelets et de résistance à l'éclatement dégradées. Ces propriétés sont conservées par l'invention.

L'invention sera mieux comprise à l'aide du dessin annexé à la description, illustrant des exemples non limitatifs d'exécution d'une jante destinée au montage d'un pneumatique 185/60-14, dessin sur lequel
- la figure 1 montre schématiquement, vue en section méridienne, une première variante de jante, conforme à l'invention et munie d'un anneau de soutien de bande de roulement,
- les figures 2 à 4 montrent schématiquement et respectivement une deuxième, une troisième et une quatrième variantes de jante conformes à l'invention,
- la figure 5 montre une cinquième variante de jante, munie d'un anneau de soutien ayant une forme adaptée.

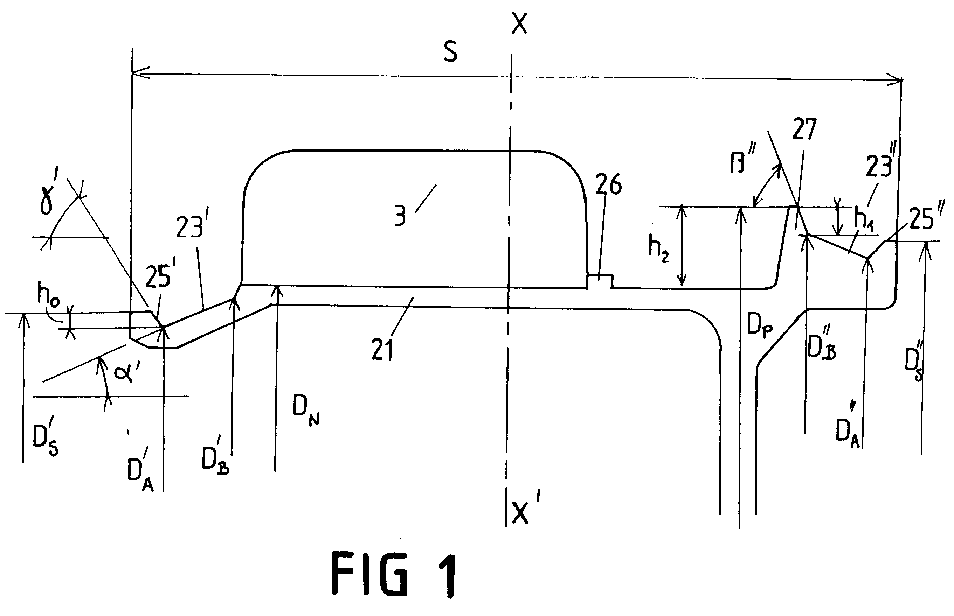

La jante (2) montrée sur la figure 1, de largeur axiale S, mesurée entre ses extrémités ou bords les plus éloignés du plan équatorial XX', est formée principalement de deux sièges de jante (23') et (23'') et d'un fond de jante (21), démuni de gorge de montage. Les deux sièges de jante (23') et (23'') ont des extrémités axialement extérieures sur des cercles dont les diamètres D'_{A} et D''_{A} sont inférieurs aux diamètres D'_{B} et D''_{B} des cercles sur lesquels se trouvent les deux extrémités axialement intérieures. Ces deux sièges ont des génératrices tronconiques faisant avec l'axe de rotation de la jante un angle α', identique pour les deux génératrices, égal à 6°. Le diamètre D''_{B} de l'extrémité axialement intérieure du deuxième siège de jante (23'') est supérieur au diamètre D'_{B} de l'extrémité axialement intérieure du premier siège de jante (23'). Les deux sièges de jante (23') et (23'') sont prolongés axialement à l'extérieur, respectivement par deux saillies (25') et (25'') de faible hauteur h₀, égale à 3,5 mm dans l'exemple décrit, et respectivement de diamètres D'_{S} et D''_{S}, inférieurs aux diamètres D'_{B} et D''_{B} des extrémités axialement intérieures des sièges (23') et (23''). Les deux saillies (25') et (25'') ont des parois intérieures tronconiques, lesdites parois faisant avec l'axe de rotation de la jante un même angle γ', égal à 45°. Axialement à l'intérieur, le premier siège de jante (23') est réuni au fond de jante (21) par l'intermédiaire d'une génératrice tronconique, le diamètre D_{N} du fond de jante cylindrique (21), étant très légèrement supérieur au diamètre D'_{B} de l'extrémité axialement intérieure du premier siège (23'). Ledit fond de jante (21) est pourvu d'une butée de positionnement (26), servant, comme son nom l'indique, à positionner axialement un anneau de soutien (3) de bande de roulement, de largeur axiale inférieure à la distance axiale séparant les deux extrémités axialement intérieures des sièges de jante (23') et (23'') directement enfilable au dessus du premier siège. Entre l'extrémité axialement intérieure du deuxième siège de jante (23'') et l'extrémité du fond de jante (21) la plus proche dudit siège (23''), est disposée une protubérance (27). Ladite protubérance (27) a, d'une part une génératrice extérieure tronconique faisant avec l'axe de rotation un angle β'', ouvert axialement vers l'intérieur et radialement vers l'extérieur et égal à 45°, et d'autre part une génératrice intérieure sensiblement perpendiculaire à l'axe de rotation de la jante. Il faut entendre par sensiblement perpendiculaire une génératrice faisant avec l'axe de rotation de la jante un angle ouvert axialement et radialement vers l'extérieur compris entre 75° et 90°. La protubérance (27) a son extrémité radialement extérieure sur un cercle de diamètre D_{P}, diamètre qui est supérieur au diamètre de toute partie située entre ladite extrémité et le bord de jante correspondant au siège (23''), et en particulier supérieur aux diamètres D''_{B}, D''_{A,} et D''_{S}, qui est le diamètre de la saillie (25''). La différence 2h₁ entre les diamètres D_{P} et D''_{B}, égale à 9 mm dans l'exemple décrit, est inférieure à la moitié de la différence 2h₂ entre les diamètres D_{P} et D_{N}, h₂ étant égale à 10 mm.

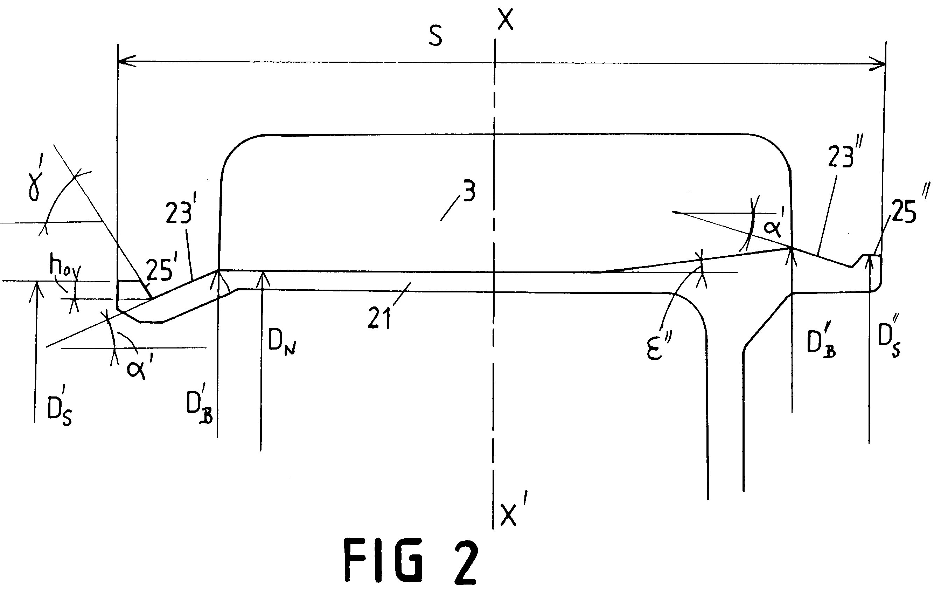

La jante (2) montrée sur la figure 2 diffère principalement de celle montrée sur la figure 1 par le fait que le fond de jante (21) est dans sa totalité une portée apte à recevoir un anneau de soutien (3) de bande de roulement. Le fond de jante (21) n'est pas totalement cylindrique, mais comporte en partie une génératrice tronconique faisant avec l'axe de rotation de la jante un angle ε '' ouvert axialement et radialement vers l'extérieur de faible valeur, égal dans l'exemple décrit à 10°. Ladite génératrice tronconique du fond de jante (21) est adjacente axialement à l'extrémité axialement intérieure du deuxième siège de jante (23''), le diamètre D''_{B} de ladite extrémité étant toujours supérieur au diamètre D'_{B} de l'extrémité axialement intérieure du premier siège de jante (23'), diamètre lui-même égal au diamètre D_{N} minimum du fond de jante (21).

L'anneau 3 agit alors comme un rebord interne pour le maintien antidécoincement de chaque bourrelet du pneu.

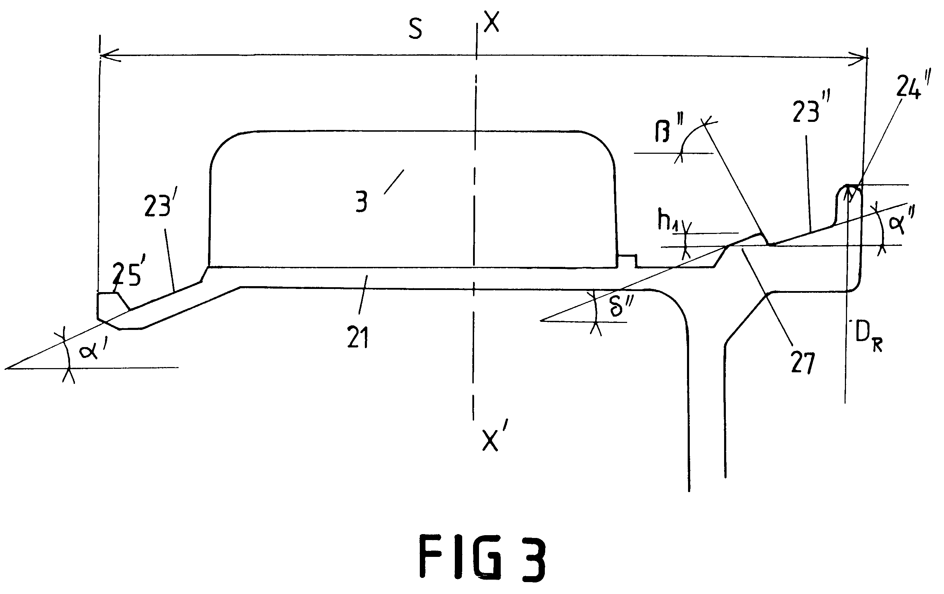

La jante (2) montrée sur la figure 3 diffère de celle montrée sur la figure 1 par la présence d'un deuxième siège de jante (23'') incliné vers l'intérieur. En effet, le deuxième siège (23'') a une extrémité axialement intérieure située sur un cercle de diamètre inférieur au diamètre du cercle sur lequel se trouve l'extrémité axialement extérieure. Ce deuxième siège de jante (23'') a une génératrice tronconique faisant avec l'axe de rotation de la jante un angle α'', ouvert axialement et radialement vers l'extérieur, inférieur à l'angle α' que fait la génératrice du premier siège de jante (23') avec ledit axe de rotation, cette solution permettant de modifier le serrage sur jante, du bourrelet correspondant du pneumatique. Le siège (23'') est prolongé axialement à l'extérieur par un rebord de jante (24), ayant une paroi intérieure perpendiculaire à l'axe de rotation et ayant une extrémité radialement extérieure dont le diamètre D_{R} est le diamètre maximum de la jante (2). Axialement à l'intérieur, le deuxième siège de jante (23'') est prolongé par une protubérance (27), dont la hauteur h₁ est semblable à la hauteur des saillies ou humps normalement utilisées sur les jantes actuelles et normalisées, dites à profil anti-décoinçant et portant les dénominations telles que "Hump", "Double Hump", "Flat Hump", "Double Flat Hump", "Asymmetric Hump" etc . La génératrice extérieure de ladite saillie fait avec l'axe de rotation de la jante un angle β'' égal à 45°, tandis que la génératrice intérieure de ladite saillie (27) fait avec ledit axe de rotation un angle δ'' ouvert axialement et radialement vers l'extérieur et égal à 30°.

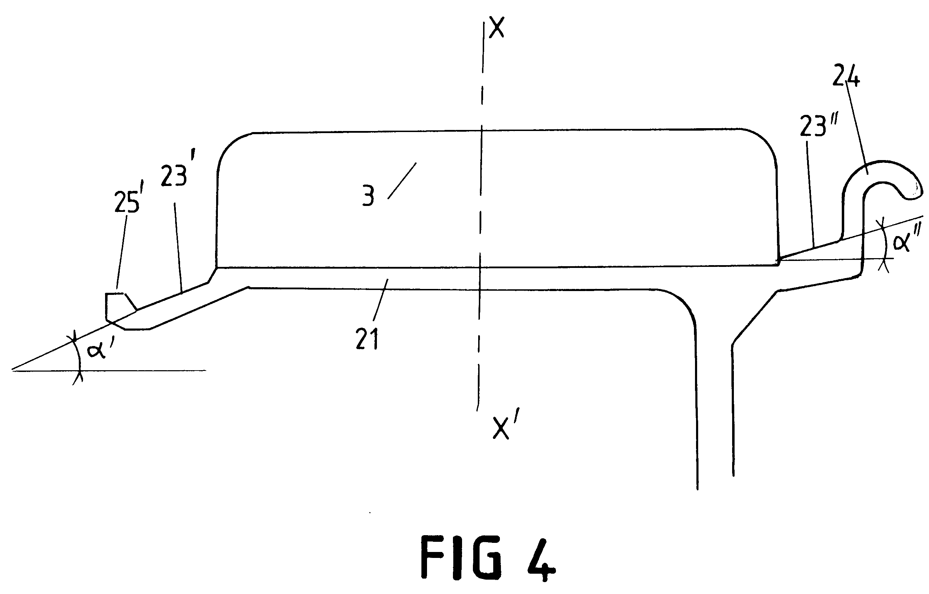

La jante (2), montrée sur la figure 4, est très simple. La configuration du premier siège de jante (23') est inchangée par rapport aux premiers sièges de jante décrits; le fond de jante (21) est cylindrique et occupe toute la distance axiale comprise entre les extrémités axialement intérieures des deux sièges de jante (23') et (23''); le deuxième siège de jante (23'') est un siège incliné vers l'intérieur et sa génératrice fait, avec l'axe de rotation de la jante et, comme dans l'exemple montré sur la figure 3, un angle α'' inférieur à l'angle α' que fait avec ledit axe la génératrice du premier siège de jante (23'). Le deuxième siège de jante (23'') est prolongé axialement à l'extérieur par un rebord de jante (24) muni d'un crochet, dont la configuration est en tous points semblable à celle d'un rebord de jante connu et normalisé. A l'intérieur, le deuxième siège de jante (23'') a son extrémité axialement intérieure dans le plan parallèle au plan équatorial qui contient aussi l'extrémité du fond de jante (21), et l'anneau de soutien (3) repose sur la totalité de la largeur axiale du fond de jante (21).

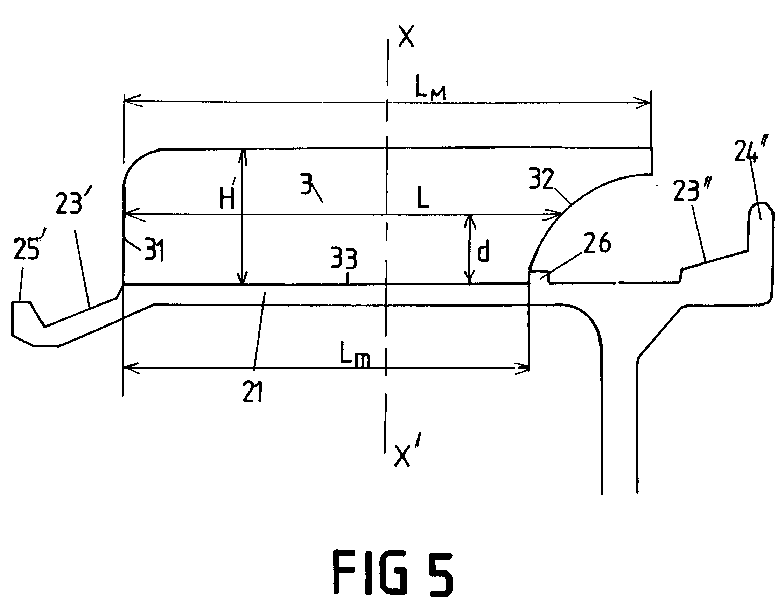

La figure 5 montre un ensemble formé d'une jante (2) conforme à l'invention et d'un anneau de soutien (3) de bande de roulement ayant une forme, vue en section méridienne, particulière. La jante (2) est sensiblement identique à la jante (2) montrée sur la figure 3, dans laquelle on a supprimé la protubérance (27), l'extrémité axialement intérieure du deuxième siège de jante (23'') étant adjacente à l'extrémité du fond de jante (21) la plus proche dudit siège (23''). Quant à l'anneau de soutien (3), ayant une base (33) de largeur axiale Lₘ inférieure à la distance axiale séparant les deux extrémités du fond de jante (21), celui-ci possédant une butée de positionnement (26), il a, d'une part une paroi latérale (31), la plus proche du premier siège de jante (23'), sensiblement perpendiculaire à l'axe de rotation de la jante (2), et, d'autre part, une paroi latérale (32), la plus proche du deuxième siège de jante (23''), telle que la largeur axiale L de l'anneau, mesurée sur une droite parallèle à l'axe de rotation, croisse de façon régulière de la valeur minimale Lₘ à une valeur maximale L_{M}, en fonction de la distance radiale d mesurée à partir du fond de jante (21), ladite largeur maximale L_{M} étant atteinte pour une hauteur d'anneau sensiblement égale à 90% de la hauteur H' totale de l'anneau (3). Cette dernière solution permet, comme décrit ci-dessus, de supprimer la protubérance (27), tout en évitant le décoincement du bourrelet destiné à être monté sur le deuxième siège de jante, le flanc correspondant audit bourrelet pouvant prendre appui sur la paroi latérale de l'anneau de soutien.

## Revendications

1. Jante (2) monobloc, destinée au montage d'un pneumatique comprenant au moins deux bourrelets, délimitée axialement par un premier bord et un deuxième bord de jante, distants axialement de la largeur S de jante et comprenant, vue en section méridienne, au moins un premier siège (23') et un deuxième siège (23'') de jante, et un fond de jante (21), caractérisée en ce que le premier siège de jante (23') a une génératrice dont l'extrémité axialement intérieure est sur un cercle de diamètre supérieur au diamètre du cercle sur lequel se trouve l'extrémité axialement extérieure, ledit premier siège de jante étant prolongé axialement à l'extérieur par une saillie ou hump de faible hauteur, le deuxième siège de jante (23'') ayant une génératrice dont l'extrémité axialement intérieure est sur un cercle de diamètre supérieur au diamètre du cercle sur lequel se trouve l'extrémité axialement intérieure du premier siège de jante (23'); et le fond de jante (21), démuni de gorge, ayant un diamètre minimum, qui est le diamètre de son extrémité axialement la plus proche du premier siège de jante (23'), au moins égal au diamètre de toute partie de jante comprise entre ladite extrémité et le premier bord de jante.

2. Jante (2) selon la revendication 1, caractérisée en ce que le deuxième siège de jante (23'') a une génératrice dont l'extrémité axialement extérieure est sur un cercle de diamètre inférieur au diamètre du cercle sur lequel se trouve l'extrémité axialement intérieure dudit siège (23'').

3. Jante selon la revendication 2, caractérisée en ce que le deuxième siège de jante (23'') est prolongé, axialement à l'extérieur, par une saillie de faible hauteur.

4. Jante (2) selon la revendication 1, caractérisée en ce que le deuxième siège de jante (23'') a une génératrice dont l'extrémité axialement extérieure est sur un cercle de diamètre au moins égal au diamètre du cercle sur lequel se trouve l'extrémité axialement intérieure dudit siège (23'').

5. Jante (2) selon la revendication 4, caractérisée en ce que le deuxième siège de jante (23'') est prolongé axialement à l'extérieur par un rebord de jante (24), formé d'au moins une partie sensiblement perpendiculaire à l'axe de rotation.

6. Jante (2) selon l'une des revendications 1 à 5, caractérisée en ce qu'elle comprend un fond de jante (21) muni d'une butée de positionnement (26) pour anneau de soutien (3) de bande de roulement, ladite butée (26) étant disposée axialement entre les deux extrémités du fond de jante (21) et définissant, avec l'extrémité du fond de jante (21) la plus proche de l'extrémité axialement intérieure du premier siège de jante (23'), une portée, destinée à recevoir l'anneau de soutien (3) de bande de roulement, anneau (3) qui sert de butée au bourrelet de pneumatique destiné à être monté sur le premier siège de jante (23').

7. Jante (2) selon la revendication 6, caractérisée en ce que le deuxième siège de jante (23'') est axialement adjacent à l'intérieur à la génératrice d'une protubérance (27), génératrice faisant avec l'axe de rotation de la jante un angle β'', ouvert axialement vers l'intérieur et radialement vers l'extérieur et au moins égal à 45°.

8. Jante (2) selon la revendication 7, caractérisée en ce que, le deuxième siège de jante (23'') étant incliné vers l'intérieur, la hauteur de la protubérance (27), mesurée par rapport à l'extrémité axialement intérieure dudit siège (23''), est faible et semblable à la hauteur des saillies ou humps qui prolongent à l'intérieur les sièges de jante actuels et normalisés.

9. Jante (2) selon la revendication 8, caractérisée en ce que la paroi axialement intérieure de la protubérance (27) a une génératrice sensiblement tronconique et faisant avec l'axe de rotation de la jante un angle δ'' ouvert axialement et radialement vers l'extérieur et au plus égal à 45°.

10. Jante (2) selon la revendication 7, caractérisée en ce que, le deuxième siège de jante (23'') étant incliné vers l'extérieur, la protubérance (27) a une paroi axialement intérieure sensiblement perpendiculaire à l'axe de rotation de la jante, la hauteur h₁ de la paroi axialement extérieure de ladite protubérance (27) étant inférieure à la moitié de la hauteur h₂ de sa paroi axialement intérieure, mesurée par rapport à l'extrémité du fond de jante (21) la plus proche du deuxième siège de jante (23''), et le diamètre D_{P} du cercle sur lequel se trouve l'extrémité radialement extérieure de ladite protubérance (27) étant alors supérieur au diamètre de toute partie de la jante (2) comprise entre ladite protubérance (27) et le deuxième bord de jante.

11. Jante (2) selon l'une des revendications 1 à 5, caractérisée en ce qu'elle comprend un fond de jante (21), apte à recevoir un anneau de soutien (3) de bande de roulement dont la largeur axiale à sa base est égale à la distance axiale séparant les deux bourrelets du pneumatique, monté sur jante et gonflé à sa pression de service et un deuxième siège de jante (23'') incliné vers l'extérieur, ledit siège de jante étant prolongé axialement à l'intérieur par une première génératrice tronconique faisant avec l'axe de rotation de la jante un angle β'', ouvert axialement vers l'intérieur et radialement vers l'extérieur et au moins égal à 45°, de hauteur h₁ faible, et dont l'extrémité radialement extérieure est sur le cercle de diamètre maximum de la jante, ladite génératrice étant prolongée axialement à l'intérieur par une seconde génératrice tronconique faisant avec l'axe de rotation un angle ε'', ouvert radialement et axialement vers l'extérieur et au plus égal à 30°

12. Jante selon la revendication 11, caractérisée en ce que la hauteur h₁ de la première génératrice est nulle.

13. Jante selon l'une des revendications 1 à 5 caractérisée en ce qu'elle comprend un fond de jante (21), apte à recevoir un anneau de soutien (3) de bande de roulement dont la largeur axiale à sa base est égale à la distance axiale séparant les deux bourrelets du pneumatique, monté sur jante et gonflé à sa pression de service et un deuxième siège de jante (23'') incliné vers l'intérieur, l'extrémité axialement intérieure dudit siège (23'') étant dans le même plan parallèle au plan équatorial que l'extrémité du fond de jante (21) la plus proche dudit siège (23'').

14. Jante selon l'une des revendications 1 à 13, caractérisée en ce que les sièges de jante (23') et (23'') ont des génératrices tronconiques faisant avec l'axe de rotation de la jante des angles α' et α'' compris entre 0° et 30°.

15. Jante selon l'une des revendications 1 à 14, caractérisée en ce que le fond de jante (21) a une génératrice rectiligne, et parallèle à l'axe de rotation de la jante, le fond de jante (21) étant alors cylindrique, et dont le diamètre minimum D_{N} est égal au diamètre D'_{B} du cercle sur lequel se trouve l'extrémité axialement intérieure du premier siège de jante (23').

16. Ensemble, formé par une jante et un anneau de soutien de bande de roulement, caractérisé en ce qu'il comprend une jante (2) selon l'une des revendications 1 à 15 et que l'anneau de soutien (3) de bande de roulement est ovalisable, de préférence inextensible circonférentiellement et enfilable sur le fond de jante (21).

17. Ensemble, formé par une jante et un anneau de soutien de bande de roulement, caractérisé en ce qu'il comprend une jante (2) selon l'une des revendications 6 à 10 et un anneau de soutien (3), ayant une base (33) de largeur axiale Lₘ inférieure à la distance axiale séparant les deux extrémités du fond de jante (21), ayant, d'une part une paroi latérale (31), la plus proche du premier siège de jante (23'), sensiblement perpendiculaire à l'axe de rotation de la jante (2), et, d'autre part, une paroi latérale (32), la plus proche du deuxième siège de jante (23''), telle que la largeur axiale L de l'anneau, mesurée sur une droite parallèle à l'axe de rotation, croisse de façon régulière de la valeur minimale Lₘ à une valeur maximale L_{M}, en fonction de la distance radiale d mesurée à partir du fond de jante (21), ladite largeur maximale L_{M} étant atteinte pour une hauteur d'anneau sensiblement égale à 90% de la hauteur H' totale de l'anneau (3).

## Claims

1. An integral rim (2), intended for the mounting of a tyre comprising at least two beads, which rim is axially defined by a first rim edge and a second rim edge, spaced apart axially by the rim width S and comprising, when viewed in meridian section, at least a first rim seat (23') and a second rim seat (23''), and a rim base (21), characterised in that the first rim seat (23') has a generatrix, the axially inner end of which is on a circle of diameter greater than the diameter of the circle on which the axially outer end is located, said first rim seat being extended axially on the outside by a projection or hump of low height, the second rim seat (23'') having a generatrix the axially inner end of which is on a circle of diameter greater than the diameter of the circle on which the axially inner end of the first rim seat (23') is located; and the rim base (21), without a groove, having a minimum diameter, which is the diameter of its end which is axially closest to the first rim seat (23'), at least equal to the diameter of any part of the rim included between said end and the first rim edge.

2. A rim (2) according to Claim 1, characterised in that the second rim seat (23'') has a generatrix, the axially outer end of which is on a circle of a diameter less than the diameter of the circle on which the axially inner end of said seat (23'') is located.

3. A rim according to Claim 2, characterised in that the second rim seat (23'') is extended axially on the outside by a projection of low height.

4. A rim (2) according to Claim 1, characterised in that the second rim seat (23'') has a generatrix, the axially outer end of which is on a circle of a diameter at least equal to the diameter of the circle on which the axially inner end of said seat (23'') is located.

5. A rim (2) according to Claim 4, characterised in that the second rim seat (23'') is extended axially on the outside by a rim flange (24) formed by at least one part substantially perpendicular to the axis of rotation.

6. A rim (2) according to one of Claims 1 to 5, characterised in that it comprises a rim base (21) provided with a positioning stop (26) for a supporting ring (3) of the tread, said stop (26) being arranged axially between the two ends of the rim base (21), and defining, with the end of the rim base (21) closest to the axially inner end of the first rim seat (23'), a supporting surface intended to receive the supporting ring (3) of the tread, which ring (3) serves as a stop for the tyre bead intended to be mounted on the first rim seat (23').

7. A rim (2) according to Claim 6, characterised in that the second rim seat (23'') is axially adjacent on the inside to the generatrix of a protuberance (27), which generatrix forms an angle β'' of at least 45° open axially towards the inside and radially towards the outside with the axis of rotation of the rim.

8. A rim (2) according to Claim 7, characterised in that, the second rim seat (23'') being inclined towards the inside, the height of the protuberance (27), measured with respect to the axially inner end of said seat (23''), is low and similar to the height of the projections or humps which extend on the inside the current, standardised rim seats.

9. A rim (2) according to Claim 8, characterised in that the axially inner wall of the protuberance (27) has a substantially frustoconical generatrix forming with the axis of rotation of the rim an angle δ'' of at most 45° open axially and radially towards the outside.

10. A rim (2) according to Claim 7, characterised in that, the second rim seat (23'') being inclined towards the outside, the protuberance (27) has an axially inner wall substantially perpendicular to the axis of rotation of the rim, the height h₁ of the axially outer wall of said protuberance (27) being less than half the height h₂ of its axially inner wall, measured with respect to the end of the rim base (21) closest to the second rim seat (23''), and the diameter D_{P} of the circle on which the radially outer end of said protuberance (27) is located then being greater than the diameter of any part of the rim (2) comprised between said protuberance (27) and the second rim edge.

11. A rim (2) according to one of Claims 1 to 5, characterised in that it comprises a rim base (21) suitable for receiving a supporting ring (3) for the tread, the axial width of which at its base is equal to the axial distance between the two beads of the tyre, mounted on a rim and inflated to its service pressure, and a second rim seat (23'') inclined towards the outside, said rim seat being extended axially on the inside by a first frustoconical generatrix forming with the axis of rotation of the rim an angle β'', open axially towards the inside and radially towards the outside and at least equal to 45°, of low height h₁, and the radially outer end of which is on the circle of maximum diameter of the rim, said generatrix being extended axially on the inside by a second frustoconical generatrix forming an angle ε'' of at most 30° open radially and axially towards the outside with the axis of rotation.

12. A rim according to Claim 11, characterised in that the height h₁ of the first generatrix is zero.

13. A rim according to one of Claims 1 to 5, characterized in that it comprises a rim base (21) suitable for receiving a supporting ring (3) for the tread, the axial width of which at its base is equal to the axial distance between the two beads of the tyre, mounted on a rim and inflated to its service pressure, and a second rim seat (23'') inclined towards the inside, the axially [word missing] end of said seat (23'') being in the same plane parallel to the equatorial plane as the end of the rim base (21) closest to said seat (23'').

14. A rim according to one of Claims 1 to 13, characterised in that the rim seats (23') and (23'') have frustoconical generatrices forming angles α' and α'' of between 0° and 30° with the axis of rotation of the rim.

15. A rim according to one of Claims 1 to 14, characterised in that the rim base (21) has a rectilinear generatrix parallel to the axis of rotation of the rim, the rim base (21) then being cylindrical, and the minimum diameter D_{N} of which is equal to the diameter D'_{B} of the circle on which the axially inner end of the first rim seat (23') [is located].

16. An assembly, formed by a rim and a supporting ring of the tread, characterised in that it comprises a rim (2) according to one of Claims 1 to 15 and that the supporting ring (3) of the tread is ovalisable, preferably circumferentially inextensible and able to be slipped on to the rim base (21).

17. An assembly, formed by a rim and a supporting ring of the tread, characterised in that it comprises a rim (2) according to one of Claims 6 to 10 and a supporting ring (3), having a base (33) of axial width Lₘ less than the axial distance between the two ends of the rim base (21), having, firstly, a lateral wall (31) closest to the first rim seat (23'), substantially perpendicular to the axis of rotation of the rim (2), and, secondly, a lateral wall (32) closest to the second rim seat (23''), such that the axial width L of the ring, measured on a straight line parallel to the axis of rotation, increases regularly from the minimum value Lₘ to a maximum value L_{M}, as a function of the radiai distance d measured from the rim base (21), said maximum width L_{M} being attained for a height of ring substantially equal to 90% of the total height H' of the ring (3).

## Patentansprüche

1. Einstückige Felge (2), die zur Montage eines Reifens bestimmt ist, der mindestens zwei Wülste aufweist, axial mit einem ersten Felgenrand und einem zweiten Felgenrand begrenzt ist, die axial um die Felgenbreite S entfernt sind, und, im Meridianschnitt gesehen, mindestens einen ersten Felgensitz (23') und einen zweiten Felgensitz (23'') sowie einen Felgenboden (21) aufweist,
**dadurch gekennzeichnet, daß**
der erste Felgensitz (23') eine Erzeugendehat, deren axial innenliegendes Ende auf einem Kreis mit einem Durchmesser liegt, der größer ist als der Durchmesser des Kreises, auf dem sich das axial außenliegende Ende befindet, wobei der genannte erste Felgensitz axial nach außen um einen Vorsprung oder Höcker mit geringer Höhe verlängert ist, der zweite Felgensitz (23'') eine Erzeugende aufweist, deren axial innenliegendes Ende auf einem Kreis mit einem Durchmesser liegt, der größer ist als der Durchmesser des Kreises, auf dem sich das axial innenliegende Ende des ersten Felgensitzes (23') befindet; und der Felgenboden (21), der keine Nut aufweist, einen Mindestdurchmesser hat, der der Durchmesser seines Endes ist, das axial dem ersten Felgensitz (23') nächstgelegen ist und mindestens gleich dem Durchmesser eines jeden Felgenabschnitts ist, der zwischen dem genannten Ende und dem ersten Felgenrand liegt.

2. Felge (2) nach Anspruch 1, dadurch gekennzeichnet, daß der zweite Felgensitz (23'') eine Erzeugende aufweist, deren axial außenliegendes Ende auf einem Kreis mit einem Durchmesser liegt, der kleiner ist als der Durchmesser des Kreises, auf dem sich das axial innenliegende Ende des genannten Sitzes (23'') befindet.

3. Felge nach Anspruch 2, dadurch gekennzeichnet, daß der zweite Felgensitz (23'') axial auf der Außenseite um einen Vorsprung mit geringer Höhe verlängert ist.

4. Felge (2) nach Anspruch 1, dadurch gekennzeichnet, daß der zweite Felgensitz (23'') eine Erzeugende aufweist, deren axial außenliegendes Ende sich auf einem Kreis mit einem Durchmesser befindet, der mindestens gleich ist dem Durchmesser des Kreises, auf dem sich das axial innenliegende Ende des genannten Sitzes (23'') befindet.

5. Felge (2) nach Anspruch 4, dadurch gekennzeichnet, daß der zweite Felgensitz (23'') axial nach außen um einen Felgenring (24) verlängert ist, der mindestens aus einem Abschnitt gebildet ist, der sich im wesentlichen senkrecht zur Drehachse erstreckt.

6. Felge (2) nach einem der Ansprüche 1 bis 5, dadurch gekennzeichnet, daß sie einen Felgenboden (21) aufweist, der mit einem Positionierungsanschlag (26) für einen Stützring (3) für die Lauffläche versehen ist, wobei der genannte Anschlag (26) axial zwischen den beiden Enden des Felgenbodens (21) angeordnet ist und zusammen mit dem Ende des Felgenbodens (21), das dem axial innenliegenden Ende des ersten Felgensitzes (23') nächstgelegen ist, einen Bereich festlegt, der dazu bestimmt ist, den Stützring (3) für die Lauffläche aufzunehmen, wobei der Ring (3) als Anschlag für den Reifenwulst dient, der dazu bestimmt ist, auf dem ersten Felgensitz (23') montiert zu werden.

7. Felge (2) nach Anspruch 6, dadurch gekennzeichnet, daß der zweite Felgensitz (23'') axial auf der Innenseite einer Erzeugenden einer Ausstülpung (27) benachbart ist, und daß die Erzeugende zur Drehachse der Felge einen Winkel β'' bildet, der nach innen und radial nach außen offen ist und mindestens 45° beträgt.

8. Felge (2) nach Anspruch 7, dadurch gekennzeichnet, daß, während der zweite Felgensitz (23'') nach innen geneigt ist, die Höhe der Ausstülpung (27), gemessen in Bezug auf das axial innenliegende Ende des genannten Sitzes (23''), gering ist und der Höhe der Vorsprünge oder Höcker ähnelt, die auf der Innenseite die gegenwärtigen und genormten Felgensitze verlängern.

9. Felge (2) nach Anspruch 8, dadurch gekennzeichnet, daß die axial innenliegende Wand der Ausstülpung (27) eine im wesentlichen kegelstumpfförmige Erzeugende hat und zusammen mit der Drehachse der Felge einen Winkel δ'' bildet, der axial und radial nach außen offen ist und höchstens 45° beträgt.

10. Felge (2) nach Anspruch 7, dadurch gekennzeichnet, daR, während der zweite Felgensitz (23'') nach außen geneigt ist, die Ausstülpung (27) eine axial innenliegende, zur Drehachse der Felge im wesentlichen senkrechte Wand aufweist, wobei die Höhe h₁ der axial außenliegenden Wand der genannten Ausstülpung (27) kleiner ist als die Hälfte der Höhe h₂ ihrer axial innenliegenden Wand, gemessen in Bezug auf das Ende des Felgenbodens (21), das den zweiten Felgensitz (23'') nächstgelegen ist, und daß der Durchmesser D_{P} des Kreises, auf dem sich das radial außenliegende Ende der genannten Ausstülpung (27) befindet, dann größer ist als der Durchmesser eines jeden Felgenabschnitts (2), der zwischen der genannten Ausstülpung (27) und dem zweiten Felgenrand liegt.

11. Felge (2) nach einem der Ansprüche 1 bis 5, dadurch gekennzeichnet, daß sie einen Felgenboden (21) aufweist, der dazu eingerichtet ist, einen Stützring (3) für die Lauffläche aufzunehmen, dessen axiale Breite an seiner Basis gleich ist dem axialen Abstand, der die beiden Wülste des Reifens trennt, wenn er auf der Felge montiert und auf seinen Betriebsdruck aufgepumpt ist, sowie einen zweiten Felgensitz (23''), der nach außen geneigt ist, wobei der genannte Felgensitz axial nach innen um eine erste kegelstumpfförmige Erzeugende verlängert ist, die zur Drehachse der Felge einen Winkel β'' bildet, der axial nach innen und radial nach außen offen ist und mindestens 45° beträgt, mit einer geringen Höhe h₁, und wovon das radial außenliegende Ende auf dem Kreis mit dem größten Durchmesser der Felge liegt, wobei die genannte Erzeugende axial nach innen durch eine zweite kegelstumpfförmige Erzeugende verlängert ist, die mit der Drehachse einen Winkel ε'' bildet, der radial und axial nach außen offen ist und höchstens 30° beträgt.

12. Felge nach Anspruch 11, dadurch gekennzeichnet, daß die Höhe h₁ der ersten Erzeugenden Null beträgt.

13. Felge nach einem der Ansprüche 1 bis 5, dadurch gekennzeichnet, daß sie einen Felgenboden (21) aufweist, der dazu eingerichtet ist, einen Stützring (3) für die Lauffläche aufzunehmen, von dem die axiale Breite an seiner Basis gleich ist dem axialen Abstand, der die beiden Wülste des Reifens trennt, der auf der Felge angebracht und auf seinen Betriebsdruck aufgepumpt ist, sowie einen zweiten Felgensitz (23''), der nach innen geneigt ist, wobei das axial (innenliegende) Ende des genannten Sitzes (23'') in derselben Ebene parallel zur Äquatorialebene liegt wie das Ende des Felgenbodens (21), das dem genannten Sitz (23'') nächstgelegen ist.

14. Felge nach einem der Ansprüche 1 bis 13, dadurch gekennzeichnet, daß die Felgensitze (23') und (23'') kegelstumpfförmige Erzeugende aufweisen, die mit der Drehachse der Felge Winkel α' und α'' bilden, die zwischen 0° und 30° liegen.

15. Felge nach einem der Ansprüche 1 bis 14, dadurch gekennzeichnet, daß der Felgenboden (21) eine Erzeugende hat, die geradlinig ist und parallel zur Drehachse der Felge verläuft, so daß der Felgenboden (21) dann zylindrisch ist, und wovon der kleinste Durchmesser D_{N} gleich ist dem Durchmesser D'_{B} des Kreises, auf dem das axial innenliegende Ende des ersten Felgensitzes (23') liegt.

16. Baugruppe, die von einer Felge und einem Stützring für die Lauffläche gebildet ist, dadurch gekennzeichnet, daß sie eine Felge (2) nach einem der Ansprüche 1 bis 15 aufweist, und daß der Stützring (3) für die Lauffläche oval verformbar ist, bevorzugt in Umfangsrichtung undehnbar ist und auf den Felgenboden (21) aufziehbar ist.

17. Baugruppe, die durch eine Felge und einen Stützring für die Lauffläche gebildet ist, dadurch gekennzeichnet, daß sie eine Felge (2) nach einem der Ansprüche 6 bis 10 und einen Stützring (3) aufweist, mit einer Basis (3) mit einer axialen Breite Lₘ, die kleiner ist als der axiale Abstand, der die beiden Enden des Felgenbodens (21) trennt, mit einerseits einer Seitenwand (31), die dem ersten Felgensitz (23') nächstgelegen und etwa senkrecht zur Drehachse der Felge (2) angeordnet ist, und mit andererseits einer Seitenwand (32), die dem zweiten Felgensitz (23'') nächstgelegen ist, und zwar derart, daß die axiale Breite L des Ringes, gemessen auf einer Geraden parallel zur Drehachse, gleichmäßig vom Mindestwert Lₘ bis zu einem Höchstwert L_{M} in Funktion der radialen Strecke d zunimmt, die vom Felgenboden (21) aus gemessen ist, wobei die genannte maximale Breite L_{M} für eine Höhe des Ringes erzielt wird, die etwa gleich ist 90 % der Gesamthöhe H' des Ringes (3).
